# EUROPEAN PATENT SPECIFICATION

(11) **EP 4 047 879 B1**
(45) Date of publication and mention of the grant of the patent: **04.09.2024**
(21) Application number: 21157890.1
(22) Date of filing: 18.02.2021
(51) Int. Cl.: H04L 41/0853, H04L 43/04

(54) **MECHANISM FOR REGISTRATION, DISCOVERY AND RETRIEVAL OF DATA IN A COMMUNICATION NETWORK**
MECHANISMUS ZUR REGISTRIERUNG, ENTDECKUNG UND WIEDERGEWINNUNG VON DATEN IN EINEM KOMMUNIKATIONSNETZ
MÉCANISME D'ENREGISTREMENT, DE DÉCOUVERTE ET DE RÉCUPÉRATION DES DONNÉES DANS UN RÉSEAU DE COMMUNICATION

(43) Date of publication of application: 24.08.2022
(73) Proprietor: Nokia Technologies Oy, 02610 Espoo (FI)
(72) Inventor: TANG, Haitao, 02620 Espoo (FI); SARTORI, Cinzia, 82049 Pullach (DE); POLLAKOWSKI, Olaf, 14057 Berlin (DE); ANDRIANOV, Anatoly, Schaumburg, IL 60173 (US)
(74) Representative: Script Intellectual Property LLP

(56) References cited:
- "3rd Generation Partnership Project; Technical Specification Group Services and System Aspects; Study on enablers for network automation for the 5G System (5GS); Phase 2 (Release 17)", vol. SA WG2, no. V17.0.0, 17 December 2020 (2020-12-17), pages 1 - 382, XP051999941, Retrieved from the Internet <URL:https://ftp.3gpp.org/Specs/latest/Rel-17/23_series/23700-91-h00.zip 23700-91-h00.docx> [retrieved on 20201217]
- "3rd Generation Partnership Project; Technical Specification Group Services and System Aspects; Telecommunication management; Subscriber and equipment trace; Trace data definition and management (Release 17)", vol. SA WG5, no. V17.0.0, 17 December 2020 (2020-12-17), pages 1 - 108, XP051999356, Retrieved from the Internet <URL:https://ftp.3gpp.org/Specs/archive/32_series/32.423/32423-h00.zip 32423-h00.doc> [retrieved on 20201217]
- "3rd Generation Partnership Project; Technical Specification Group Services and System Aspects; Architecture enhancements for 5G System (5GS) to support network data analytics services (Release 16)", vol. SA WG2, no. V16.6.0, 17 December 2020 (2020-12-17), pages 1 - 67, XP051999848, Retrieved from the Internet <URL:https://ftp.3gpp.org/Specs/latest/Rel-16/23_series/23288-g60.zip 23288-g60.docx> [retrieved on 20201217]
- "Guidelines for defining web services for managed objects and management interfaces", ITU-T DRAFT ; STUDY PERIOD 2013-2016, INTERNATIONAL TELECOMMUNICATION UNION, GENEVA ; CH, 13 November 2015 (2015-11-13), pages 1 - 46, XP044146447

## Description

### BACKGROUND

### Field

Examples of embodiments relate to apparatuses, methods and a computer program product for registering, discovering and retrieving data, in particular so-called historical data indicating events or measurements of the past, in a communication network based on e.g. 3GPP standards.

### Background Art

The following description of background art may include insights, discoveries, understandings or disclosures, or associations, together with disclosures not known to the relevant prior art, to at least some examples of embodiments of the present disclosure but provided by the disclosure. Some of such contributions of the disclosure may be specifically pointed out below, whereas other of such contributions of the disclosure will be apparent from the related context.

The following meanings for the abbreviations used in this specification apply:
- 3GPP: 3^{rd} Generation Partnership Project
- 4G: fourth generation
- 5G: fifth generation
- 5GS: 5G system
- AI: artificial intelligence
- AP: access point
- API: application programming interface
- BS: base station
- CM: configuration management
- CPU: central processing unit
- DCCF: data collection coordination function
- DSC: data store control
- eNB: E-UTRAN Node B
- ETSI: European Telecommunications Standards Institute
- gNB: next generation node B
- GPRS: general packet radio service
- ID: identification
- IOC: information object class
- JSON: Java script object notation
- LTE: Long Term Evolution
- LTE-A: LTE Advanced
- MDT: minimization of drive test
- MIB: management information base
- ML: machine learning
- MnF: management function
- MnS: management service
- MO: managed object
- MOI: managed object instance
- NF: network function
- NG: new generation
- NR: new radio
- NRM: network resource model
- NW: network, network side
- NWDAF: network data analytics function
- OAM: operation, administration, maintenance
- PM: performance management
- RAN: radio access network
- RAT: radio access technology
- RLF: radio link failure
- UE: user equipment
- UML: unified modelling language
- UMTS: universal mobile telecommunication system
- URI: uniform resource identifier
- XML: extensible markup language
- YANG: yet another next generation

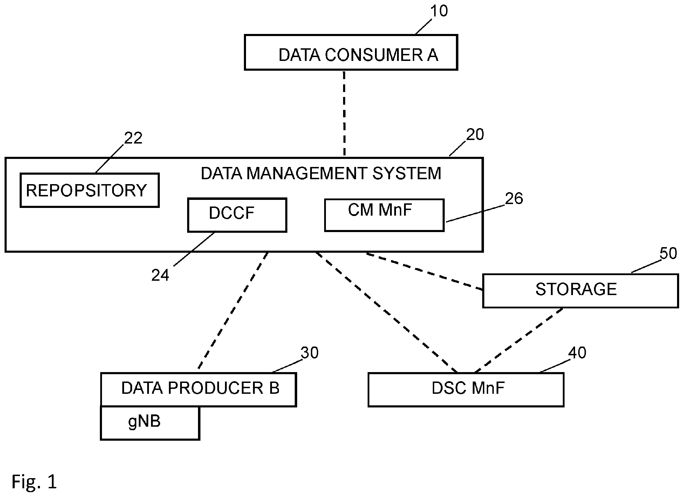

Document 3GPP TR 23.700 version 17.0.0 discloses enhancements to the 5G system that enables enhanced support of Time Sensitive Communication to support deterministic applications, wherein a network architecture based on considerations as described below with reference to Fig. 1 are defined.

Document 3GPP TS 32.423 version 17.0.0 discloses trace data definition and management, wherein trace records content, their format and transfer across networks is discussed.

Document 3GPP TS 23.288 version 16.6.0 discloses architecture enhancements for 5G system to support network data analytics services in a 5G core network.

### SUMMARY

It is an object of the invention to enable registering, discovering and retrieving data, in particular so-called historical data indicating events or measurements of the past, in a communication network. This object is achieved by an apparatus according to claim 1, or according to claim 7, or according to claim 11. Furthermore, a method according to claim 6, or according to claim 10, or according to claim 13 is provided. Advantageous further developments are as set forth in the dependent claims.

In addition, there is provided, for example, a computer program product according to claim 14 or 15.

### BRIEF DESCRIPTION OF THE DRAWINGS

Some embodiments of the present disclosure are described below, by way of example only, with reference to the accompanying drawings, in which:
Fig. 1 shows a diagram illustrating an example of a scenario in a communication network in which examples of embodiments are implementable;
Fig. 2 shows a signaling diagram explaining an example of a procedure for producing and preparing data in a communication network according to examples of embodiments;
Fig. 3 shows a signaling diagram explaining an example of a procedure for reusing historical data in a communication network according to examples of embodiments;
Fig. 4 shows a flow chart of a processing conducted in a data collection coordination element or function according to some examples of embodiments;
Fig. 5 shows a flow chart of a processing conducted in a data storage control management element or function according to some examples of embodiments;
Fig. 6 shows a flow chart of a processing conducted in a repository element or function according to some examples of embodiments;
Fig. 7 shows a diagram of a network element or function representing a data collection coordination element or function according to some examples of embodiments;
Fig. 8 shows a diagram of a network element or function representing a data storage control management element or function according to some examples of embodiments; and
Fig. 9 shows a diagram of a network element or function representing a repository element or function according to some examples of embodiments.

### DESCRIPTION OF EMBODIMENTS

In the last years, an increasing extension of communication networks, e.g. of wire based communication networks, such as the Integrated Services Digital Network (ISDN), Digital Subscriber Line (DSL), or wireless communication networks, such as the cdma2000 (code division multiple access) system, cellular 3^{rd} generation (3G) like the Universal Mobile Telecommunications System (UMTS), fourth generation (4G) communication networks or enhanced communication networks based e.g. on Long Term Evolution (LTE) or Long Term Evolution-Advanced (LTE-A), fifth generation (5G) communication networks, cellular 2^{nd} generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is obvious for a person skilled in the art that the embodiments may also be applied to other kinds of communication networks, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc.. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules etc. that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed or a centralized unit, which controls a respective coverage area or cell(s) and with which one or more communication stations such as communication elements, user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet, as well as with individual devices or groups of devices being not considered as a part of a network, such as monitoring devices like cameras, sensors, arrays of sensors, and the like. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station (BS), an gNB, a radio network controller, a core network control element or function, such as a gateway element, or other network elements or functions, such as management elements or functions, as described herein, and any other elements, functions or applications may be implemented by software, e.g. by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors.

It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

In order to support network operators of telecommunication networks, in particular wireless telecommunication networks, with information usable for diagnostic and troubleshooting, several mechanisms are established. For example, subscriber and equipment trace procedures as standardized e.g. by 3GPP are known. Trace procedures are also used for jobs like collection of minimization of driving test (MDT) measurements, radio link failure (RLF) reports and the like which are added to trace specifications and used for centralized coverage and capacity optimization.

Minimization of driving test (MDT) is a standardized mechanism introduced, for example, in 3GPP to provide operators with network performance optimization tools in a cost-efficient manner. Characteristics of MDT include, for example, that the operator is able to configure UE measurements independently from the network configuration, the UE reports measurement logs at a particular event (e.g. radio link failure), the operator has the possibility to configure the logging in geographical areas, the measurements are linked with information which makes it possible to derive the location information, and to a time stamp, and the like.

Data being required for purposes like diagnostic and troubleshooting, as described above, such as MDT/trace, but also other data like performance management (PM) measurements or the like, are originally generated by a so-called data producer, such as a communication network in the access network, like a gNB, eNB or the like, according to a corresponding request of a data consumer, which is e.g. a network data analytics function (NWDAF) providing analytics that assist control decisions at the network, e.g. in connection with NWDAF-assisted RAT/frequency selection, detection of anomaly events and helping in analyzing its cause, and the like. The data produced reports the requested data to its requesting data consumer. At the same time, they may also be reported to a data storage to be kept as historical data as well.

For example, 3GPP specification TR 28.806-g10 defines use cases for a data consumer to request non-file based trace reporting from the corresponding data producer. There are also use cases to report the same data to a data storage where the data can be kept and reused as historical data.

Furthermore, 3GPP defines, in order to support management and orchestration of communication networks, such as 5G networks, a concept referred to as Network Resource Model (NRM). NRM is an information model representing the manageable aspects of the communication network.

Basically, the NRM is a collection of so-called information object classes (IOCs), inclusive of their associations, attributes and operations, representing a set of network resources under management.

A network resource represents, for example, a discrete entity for the purpose of network and service management. A network resource may represent, for example, intelligence, information, hardware and software of a communication network. In an object-oriented environment, the network resource is represented, for the purpose of management, by the IOC, wherein the IOCs of the network resources, corresponding attributes of an IOC and relationships between IOCs are defined in the NRM.

An IOC, on the other hand, represents the management aspect of a network resource. It describes the information that can be passed/used in management interfaces. Their representations are technology agnostic software objects. The IOC has attributes that represents the various properties of the class of objects. Furthermore, the IOC can support operations providing network management services invocable on demand for that class of objects. An IOC may support notifications that report event occurrences relevant for that class of objects. It is modelled using the stereotype "class" in the UML meta-model.

In a network management architecture, which is e.g. a service-based management framework, a Management Service (MnS) is defined which combines elements of management service components. The MnS components are combined to allow an MnS consumer to interact with an MnS producer via a specified service interface. The NRM specifies, for example, MnS components by management information represented by an information model of managed entities.

A managed object (MO), on the other hand, is an instance of a Managed Object Class (MOC) representing the management aspects of a network resource. Its representation is a technology specific software object. It is also called MO instance (MOI). The MOC is a class of such technology specific software objects. An MOC is the same as an IOC except that the former is defined in technology specific terms and the latter is defined in technology agnostic terms.

A management information base (MIB) is an instance of an NRM and has some values on the defined attributes and associations specific for that instance. An MIB consists, for example, of a name space (describing the MO containment hierarchy in the MIB through distinguished names), a number of MOs with their attributes and a number of associations between these MOs.

In the current 3GPP based networks, in the NRM, only 3GPP network-specific IOCs are standardized. In other words, NRM has only limited 3GPP network-specific IOCs standardized. This makes it difficult for network interfaces and network functions to support registration, discovery, and retrieval of data as historical data.

That is, it is required to define a mechanism allowing registration, discovery, and retrieval of historical data so that a reuse the historical data in a standardized manner is possible.

For this, it is required to provide the following standard control functionality:
(1) means for registering data to a repository,
(2) means for controlling proper data storage, and
(3) means for discovery of the stored data which include a discovery API and an API to query and retrieve the stored data (i.e. historical data).

In addition, it is preferable to ensure that stored (historical) data can be reused by data consumers of different vendors and multiple data consumers (i.e. a multivendor and multi-consumer scenario). By means of this, it is possible to avoid that data collection of (otherwise already existing) data has to be repeated, which is advantageous as it allows to avoid expenses, since a corresponding data collection requires resources and time.

Fig. 1 shows a diagram illustrating an example of a scenario in a communication network where a mechanism usable for registering, discovering and retrieving data, in particular so-called historical data indicating events or measurements of the past, in a communication network based on e.g. 3GPP standards can be implemented.

As shown in Fig. 1, as a part of a 3GPP based communication network, a data management system 20 is provided. In the data management system 20, for example, several elements or functions can be comprised which are used in connection with a management service processing. As shown in Fig. 1, a repository 22, a DCCF 24 and a configuration management function (CM MnF) 26 are provided.

The DCCF 24 is, for example, a control-plane function that coordinates data collection and triggers data delivery to the data consumer. The DCCF can support multiple data sources, data consumers, and message frameworks. The DCCF provides a data exposure service to data consumers (e.g. NWDAF), and uses the services of the data sources to obtain data.

Moreover, as shown in Fig. 1, one or more data consumers 10 are provided. Basically, a data consumer in the context of examples of embodiments of the invention is a network element or function which uses data provided from one or more data producers (in the conventional configuration, for example, any communication network element or function, such as base stations, gNBs, UEs or the like) in order to conduct a preset processing, e.g. a MDT or PM process used for diagnostic and troubleshooting. One example of a data consumer which may be applied in the configuration depicted in Fig. 1 is a network data analytics function (NWDAF).

Furthermore, as shown in Fig. 1, there is provided one or data producers (or data sources), wherein in Fig. 1 only one data producer B 30 is shown. In the present example, data producers B 30 is another network function or element and part of the NRM, but it is also generally possible to use other (suitable) data sources which may be also not part of the communication network. For example, in Fig. 1, data producer B 30 represents a an access point of the communication network, e.g. a gNB.

Furthermore, as shown in Fig. 1, a data store control management function (DSC MnF) 40 is provided which is used to control a store process of data, such as historical data, in a data storage 50. It is to be noted that DSC MnF 40, even though indicated in Fig. 1 as a separate element or function, can be also implemented in the data management system 20. The data storage (in the following referred to simply as storage) can be a physical or cloud based memory in which data can be stored from one or more sources and the stored data can be retrieved from one or more requesting parties.

As indicated in Fig. 1, the data management system 20 interconnects the data producer 30 and the data consumer 10, e.g. by means of wired or wireless communication lines (not shown). Furthermore, the data management system 20 is connected to the DSC MnF 40 and the storage 50 by means of suitable interfaces.

According to examples of embodiments, there are proposed means and procedures allowing, in a standardized way, to register information about stored data (i.e. meta data) from a data producer which allows, at a later point of time, discovery and reuse of the stored data.

That is, in a first phase or procedure, also referred to hereinafter as procedure A, a specific meta data instance for the data from a data producer is created before said data is produced. For the creation of such metadata, for example, a process described in the following is usable in which combined meta data are formed, i.e. (1) meta data describing standard data, (2) meta data describing proprietary data, and (3) meta data describing context data.

In a next phase or procedure, also referred to hereinafter as procedure B, a control procedure for selecting the suitable format or schema applicable to the data of the producer is applied. By means of this, when the data are stored, they can be discovered and reused by any data consumer in a standardized manner. It is to be noted that reuse means in the context of examples of embodiments also that there is a selection of specific data instance according to a search criteria.

Then, in a next phase or procedure, also referred to hereinafter as procedure C, a registration procedure for data instances is implemented. Specifically, a data instance includes the meta data of the data generated by the data producer. The result of such registration procedure is an index or catalogue that provides means to discover and access the stored data.

Then, in a next phase or procedure, also referred to hereinafter as procedure D, a data storage is executed so as to store the produced data to the data storage in a proper manner. Furthermore, the data being (newly) produced are forwarded to a data consumer.

Finally, in a next phase or procedure, also referred to hereinafter as procedure E, a processing for conducting discovery and reuse are executed which allows any data consumer to locate and reuse the stored (historical) data. This processing is based on a combination of meta data of the stored data, wherein it is to be noted that the combination is required when more than two individual pieces of stored data are discovered. Moreover, the processing includes also the exposure of the combined meta data of the stored data so as to allow any data consumer to understand the type and semantics of the received data, e.g. when relaying the data to another data consumer (also known as service chaining).

Details of the above described procedures A to E are explained in the following, wherein reference is also made to the elements indicated in Fig. 1 to be involved in the processing.

Concerning the procedure for creating a meta data instance (i.e. procedure A), elements being involved are the DCCF 24 which receives a request from a data consumer (e.g. data consumer A 10) regarding data, and the CM MnF 26.

When the CM MnF receives a request from the DCCF to activate a data producer (e.g. a data producer being able to provide some specific sort of data) to produce and report certain data to the DCCF, the CM MnF creates a meta data instance describing the data, that will be produced later by a corresponding data producer. Then, the CM MnF sends a response to the DCCF containing the created meta data instance. It is to be noted that the response to the DCCF may also include an identifier for the meta data instance. This identifier can be used at a later point of time when reporting the produced data. In addition, the DCCF also needs the meta data to create MOI(s) for the needed data producer(s) to produce the requested data.

It is to be noted that according to some examples of embodiments, the DCCF may be also omitted. That is, for the CM MnF, the DCCF acts in this phase basically as a data consumer. Thus, a direct communication between the data consumer A 10 and the CM MnF 26 is also conceivable wherein then the data consumer has to indicate IDs of suitable data producers.

In the following, examples of embodiments are described in which the creation of the specific meta data instance for the data from a data producer before the data is produced are further explained.

As indicated above, a management function for the communication network according to examples of embodiments is configured to create and activate corresponding meta data instances when a data consumer (e.g. data consumer 10 in Fig. 1) requests that corresponding data are provided.

First, a definition of meta data for data types is described.

Meta data is provided for describing different types of data, such as meta data describing standard data (e.g. 3GPP standard related data), meta data describing proprietary data, and meta data describing context data.

Meta data attributes and definitions for meta data describing data types are indicated in table 1 below, wherein a corresponding support qualifier is assumed to be mandatory (M). It is to be noted that the definitions provided for the attribute represent only one of a plurality of examples, i.e. the type of data concerned by this data set is not limited to that specified here and could by any other suitable type of data.

**Table 1:**

| **Attribute name** | **Definition** | **Support Qualifier** |
|---|---|---|
| nameOfStandardization Body | Name of the organization that standardized the data type, e.g. "3GPP" "ITU-T". | M |
| standardID | ID of the standard defining the data type, e.g. "TS37. 320", "T.873" | M |
| standardversion | Version of the standard defining the data type | M |
| dataPurpose | String indicating the intended usage (purpose) of the data instance, e.g. MDT | M |

Meta data attributes and definitions for meta data describing data types that are not standardized, i.e. fully proprietary, are indicated in table 2 below, wherein a corresponding support qualifier is assumed to be mandatory (M). It is to be noted that also here the definitions provided for the attribute represent only one of a plurality of examples, i.e. the type of data concerned by this data set is not limited to that specified here (i.e. UTF-8 data, i.e. UCS Transformation Format, wherein UCS means Universal Coded Character Set) and could by any other suitable type of data.

**Table 2:**

| **Attribute name** | **Definition** | **Support Qualifier** |
|---|---|---|
| dataFormat | String defining how to parse the data instance, e.g. "UTF-8". | M |
| dataDescription | Text written with a human language explaining what the data instance is about, e.g. "Social events written in English" | M |
| dataPurpose | String indicating the intended usage (purpose) of the data instance, e.g. "textNaturalLanguageProcessing" or simply "textNLP". Note: Allowed values should be standardized in 3GPP | M |

Next, a definition of context data for meta data types is described.

Basically, instances of the data types (i.e. the "real" data) are related to the context, in which they have been produced. According to examples of embodiments, this context relates to the time of production and a purpose, i.e. what is described by the data (i.e. the scope of the data).

Attributes and definitions describing context data for meta data instances are indicated in table 3 below, wherein a corresponding support qualifier is assumed to be mandatory (M). It is to be noted that also here the definitions provided for the attributes represent only one of a plurality of examples, i.e. the scope or time frame related to the data set is not limited to that specified here and could by any other suitable type of data.

**Table 3:**

| **Attribute name** | **Definition** | **Support Qualifier** |
|---|---|---|
| Scope | ID(s) of the network entities relevant to the data object tagged by this dataType instance, e.g., Cell-ID, NF-ID, etc. Note: non-3GPP scope identifiers (e.g., the geographic location or its name) may be used with "raw" data; in a pre-processing step of the data flow, these can be further associated with ID(s) of network entities. | M |
| Time | time, time Sequence, or time range when the data object tagged by this dataType is produced. | M |

In the following, a definition of a model for non-3GPP data sources is described.

As described above, NRM describes generic Information Object Classes (lOCs) and relationships thereof. These artefacts are network technology agnostic (i.e. generic) and are used for modelling aspects of networks that do not differ between different network types, such as GSM, LTE, UMTS and 5G or transport networks.

A corresponding modelling pattern is also applied in examples of embodiments for modelling entities producing data. In the following, it is explained how to apply a suitable modelling pattern and required extensions to different kinds of data producers. Specifically, different concepts for modelling are proposed for data produced, depending on how close the data producer is integrated with telecommunication network.

Basically, as a key concept of IOCs used in 3GPP networks for NRM, a so-called ManagedElement and a so-called ManagedFunction are provided.

A ManagedElement is an IOC that represents a device or equipment providing support and/or service to a user or subscriber. A ManagedElement instance is used for communicating with a manager (directly or indirectly) over one or more management interfaces for the purpose of being monitored and/or controlled.

A ManagedFunction is an IOC that provides attribute(s) that are common to functional lOCs.

It is to be noted that a ManagedElement may contain one or more managed functions, and a managed function may contain other managed functions as specified for a specific subclass. When multiple ManagedFunction instances are contained, they can be all of different kinds, all of the same kind, or some of different kind and some of the same kind.

Another key concept the so-called "job" concept. A "job" is a process with some purpose running on a network function or a management function. Multiple jobs are often associated with some common purpose. These jobs are represented in the model with dedicated objects, whose class normally includes the word "job", like XYZJob.

The main difference between a job and a managed function is that the jobs are dynamically created and deleted as part of the normal daily operational process (normal configuration management, CM), whereas managed function instances correspond to either physical resources or virtualized resources. When associated with virtualized resources, managed functions have typically a longer lifetime and their life cycle is managed by life cycle management processes.

In the following, different modelling approaches depending on how well the data producer is integrated with telecommunication network functions are described.

First, a situation is assumed in which the entity producing data is a stand-alone managed element not attached to any 3GPP defined network function. For example, this is the case for data producers 1 (camera) or data producer 2 (news feed) which are shown in Fig. 1.

In this case, the entity producing non-3GPP data is modelled as follows:
- a dedicated ManagedElement is used to represent the (physical and/or virtualized) resources of the entity.
- a contained specialized ManagedFunction is used to represent the functional aspects of the entity.

For example, the specialized Managed Function is derived by inheritance from the ManagedFunction IOC defined in present 3GPP standard, such as the 3GPP TS 28.622 standard. It is to be noted that in one example the ManagedFunction IOC in turn may inherit from Function_IOC defined in 3GPP standard TS 28.620 and the TopX IOC defined in 3GPP standard TS 28.622, for example.

For example, as a name of the specialized ManagedFunction, XYZFunction may be set, wherein with XYZ indicating the type of the ManagedFunction, such as Non3GPPDataSourceFunction, or cameraFunction.

On the other hand, when the entity producing data is tightly integrated/associated with one or more 3GPP defined NFs (and hence also with the Managed Element containing the Network Function), a differing model approach may be used. For example, the entity producing such non-3GPP data is modelled as follows:
- a specialized ManagedFunction is used that is contained by a ManagedElement containing the 3GPP defined ManagedFunction instances as well.

It is to be noted that the XYZFunction in this case may have a relationship to other objects in the model, for example to a cell object, when the data it is producing is related to that cell.

According to examples of embodiments, the XYZFunction in the above cases contains inherited attributes and attributes as defined in the following Table 4. It is to be noted that attribute constraints are defined in Table 5.

Specifically, attribute names and definitions describing the attributes of the XYZFunction are indicated in table 4 below, wherein a corresponding support qualifier is assumed to be mandatory (M) or conditional mandatory (CM).

**Table 4:**

| **Attribute name** | **Definition** | **Support Qualifier** |
|---|---|---|
| administrativestate | Administrative state of a managed object instance. The administrative state describes the permission to use or prohibition against using the object instance. The administrative state is set by the MnS consumer. | M |
| | allowedValues: LOCKED, UNLOCKED. | |
| operational State | Operational state of managed object instance. The operational state describes if an object instance is operable ("ENABLED") or inoperable ("DISABLED"). This state is set by the object instance or the MnS producer and is hence READ-ONLY. | M |
| | allowedValues: ENABLED, DISABLED. | |
| controlParameterContainer | Container for additional control parameters | CM |
| metaDataOfstandardizedData | Meta data describing standardized data, as defined in Table 1 | CM |
| metaDataOfProprietoryData | Meta data describing proprietary data, as defined in Table 2 | CM |

On the other hand, attribute constraints of the data source function IOC are indicated in table 5 below.

**Table 5:**

| **Name** | **Definition** |
|---|---|
| controlParameterContainer Support Qualifier | Condition: Network management can directly control the operation of the data source function, which could produce the instance of the data object tagged by a standard dataType instance (as defined in Table 1) |
| metaDataOfstandardizedData Support Qualifier | Condition: The data source function could produce the instance of the data object tagged by a standard dataType instance (as defined in Table 1) |
| metaDataOfProprietoryData Support Qualifier | Condition: The data source function could produce the instance of the data object tagged by a non-standard dataType instance (as defined in Table 2) |

Furthermore, when the entity producing data is fully integrated with a 3GPP defined network function and is no managed function by its own, the entity producing the data can be modelled as follows:
- as a specialized job (XYZJob) contained either by a NetworkFunction, ManagedElement or subNetwork existing in the NRM.

Next, examples of embodiments for exposing the meta data in order to allow data consumers to understand the received type of data are described.

As described above, meta data are contained in an attribute of XYZFunction Managed Object Instance (MOI). This allows any data consumer to read the meta data and to understand from that what kind of data and for what purpose it can get from the data source represented by the MOI.

With regard to the association of meta data and context data to data instances, meta data and context data describes the data instances produced by the data producer. When reporting data instances to data consumers, meta data and context data is usually reported together with data instances.

However, in order to reduce an amount of transferred data, according to examples of embodiments, the meta data can be omitted from being transferred with every data instance. Instead, data consumers may get the meta data from data producers in alternative ways.

As one alternative, the meta data can be read by the data consumer from the object representing the data producer. Another alternative is that headers are defined with the meta data when reporting the data instances with files. Furthermore, dedicated packets carrying meta data can be defined when reporting the data in data streams. Moreover, specific addresses for retrieving data instances can be defined wherein certain meta data are associated to these addresses.

In the next phase which concerns the procedure for selecting a data storage (i.e. procedure B), elements being involved are the DCCF 24 and the DSC MnF 40.

The DSC MnF receives a request from the DCCF to provide an address where data, that will be produced later by the data producer, shall be stored. The request contains the meta data for the data to be produced. For example, the address is typically a URI.

Furthermore, the DSC MnF generates a schema describing the format in which the produced data and the associated meta data are to be stored into the storage. For example, the schemas may include one of an XML schema, a JSON schema or a YANG schema.

Then, the DSC MnF allocates an address. This process includes, for example, selecting an appropriate data storage or creating a new data storage in case no appropriate data storage exists. In REST it may also mean creating a resource (identified by a URI) where the produced data will be written to and read from. The representation of this resource may then be described, for example, by the JSON schema as indicated above. A query pattern for retrieving the stored data at a later point of time may be generated as well.

Thereafter, the DSC MnF returns the address to the DCCF. It is to be noted that in case the query patter is generated, the query pattern is returned as well.

In the next phase which concerns the procedure for registration (i.e. procedure C), elements being involved are the DCCF 24 and the repository 22.

The data storage (i.e. the identifier thereof, like URI), location and query pattern, which are selected in procedure B, are registered in the repository by the DSC MnF. Furthermore, the meta data instance created in procedure A is registered in the repository by the DCCF.

In the next phase which concerns the data storage procedure (i.e. procedure D), elements being involved are the data producer B 30, the DCCF 24 and the storage 50.

When the requested data are produced, the data producer B 30 sends the produced data to the DCCF 24. Furthermore, the produced data are stored in the storage 50. For this purpose, either the DCCF or alternatively the data producer sends the produced data to the storage 50, where it is stored. In addition, the DCCF sends the produced data to the data consumer A.

Then, as the next phase, the procedure for discovery and reuse of the (stored) data (i.e. procedure E) is described. Elements being involved here are the DCCF 24, the CM MnF 26, the DSC MnF 40, the storage 50 and the repository 22.

When the DCCF receives a request for certain data from data consumer A, which may have already been produced and are stored beforehand in the storage, the DCCF forms a request for these data, including metadata of the data. This request is sent to the repository.

On the repository side, the meta data are resolved into the URI(s) of the relevant data producer(s) or the URI(s) of the relevant data storage, depending on where the needed piece of data is available or maybe become available in the future. It is to be noted that in the present examples of embodiments, it is assumed that the requested piece of data has been stored in the storage 50 and has been registered to the repository. That is, it is recognized that the data only needs to be fetched from the data storage, without the need to produce it.

In this situation, the repository responds to the DCCF with the registered URI(s) where the needed data can be retrieved. The DCCF then requests the CM MnF to create and activate a datamining job via the DSC MnF.

In reaction to the datamining job, the data storage reports the corresponding (historical) data extracted from the storage to the DCCF which in turn provides the data consumer with the retrieved data.

It is to be noted that a service chaining configuration can be also applied. In the service chaining configuration, a data consumer may act as data producer and provide the received data further to another data consumer. The (first) data consumer may also inform the (second or other) data consumer about the combined meta data of the extracted piece of data. For example, the DCCF may act as data consumer and as data producer for the respective counterpart.

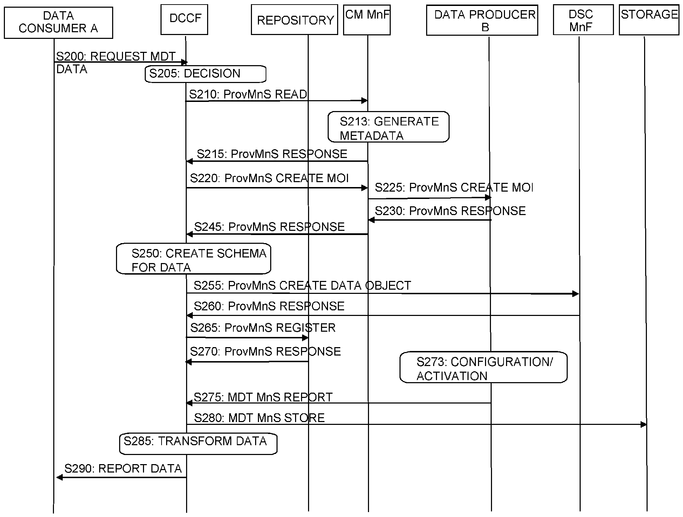

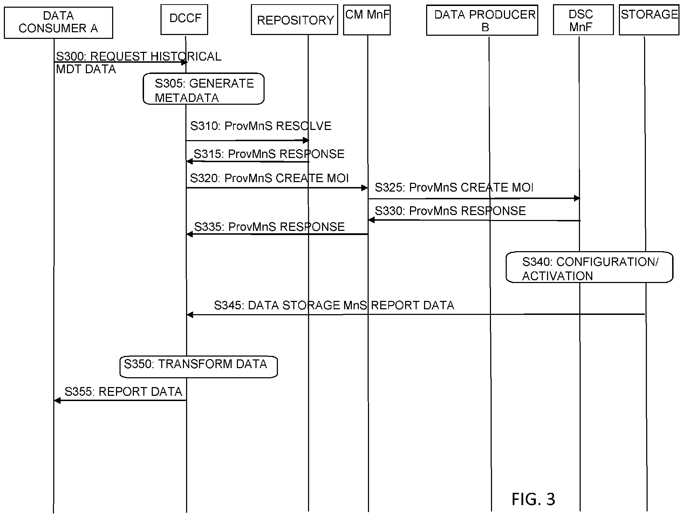

In the following, examples of embodiments illustrating a specific implementation of the concepts described above are described in connection with Figs. 2 and 3.

Specifically, Fig. 2 shows a signaling diagram explaining an example of embodiments where new data, in the present example MDT data, are produced and processed such that they are reusable at a later point of time, i.e. become historical data which can be discovered and retrieved.

In the example discussed in Fig. 2, it is assumed that a data consumer A wants to get MDT data of a specific area (location) during a specific time period. The data consumer A knows only the network entity (here the DCCF) that, for the data consumer, plays the role of a data producer. Therefore, the data consumer A requests from the DCCF the production of the required MDT data.

DCCF knows that there are no such data available yet, and decides consequently that they need to be newly produced. This is based, for example, on the time period requested, or the kind of data being requested. On the other hand, the DCCF also recognizes that the requested data (here the MDT data) represent valuable and expensive data to be produced. This determination may be based, for example, on a processing allowing to recognize what type of data is to be produced, which data consumer requests the data, or the source from where the data are to be obtained.

Consequently, the DCCF decides to start two tasks, i.e. (1) to activate the MDT job and provide the produced MDT data to the data consumer, and (2) to register the produced data as a reusable resource and to store the data for a later reuse.

In the present example, the schema to store the produced MDT data instance (i.e., for example, nrRLFReport) is defined by the DCCF, for example, as a relation schema for a relational database of the following manner:
*relation schema : table name < "nrRLFReport"> :: standardizationBody "3GPP" : standard "TS37.320" : version "g00" : time "1.12.2020* - *31.12.2020" :* scope : *<ID of network entities> : jobType : "mdt" :* ^{*1*..}**(attribute name <attribute_value_type> :).*

In the signaling diagram according to Fig. 2, a process is described which includes the above described procedures A to D.

Specifically, in S200, the data consumer 10 sends a request for data to the DCCF 24, which is in the present example related to MDF data. In the request message, as also indicated above, a scope indication regarding a time indication, such as a starting time (like 00.00 h on 1.12.2020 to 23.59 h on 31.12.2020), an interval for the data provision (e.g. seconds, minutes etc.) and the like, an indication of the purpose of the data (such as a set of supported technology, like 3GPP TS37.320 g00; MDT) and an indication regarding a data name (such as nrRLFReport) are provided.

In S205, the DCCF 24 makes a decision that relevant data sources are to be discovered, i.e. a discovery process for relevant data producers is initiated.

In S210, the DCCF 24 sends to the CM MnF 26 an indication regarding provisioning of a management service. In the indication, the CM MnF 26 is informed, for example, that it has to provide all available data producers being capable to provide data regarding the scope indication obtained in the request from the data consumer in S200, i.e. time, purpose and data name. That is, the CM MnF 26 receives a request from the DCCF 24 to activate available data producers to produce and report the required data to the DCCF 24.

In S213, the CM MnF 26 creates a meta data instance describing the data that are to be produced by a data producer. In the present example, the meta data instance indicates e.g. 3GPP, TS37.320 g00, nrRLFReport_MDT, scope and time as indicated above).

In S215, the configuration MnF 26 responds to the indication received in S210 with a provisioning MnS response message, in which the relevant MDT data producers are indicated (i.e. a list of IDs of one or more MDT data producers). Furthermore, the generated meta data instance of S213 is indicated. It is to be noted that according to some examples of embodiments the response may include also an identifier for the meta data instance. This identifier may be used later when reporting the produced data. In addition, DCCF 24 requires the meta data to create MOI(s) for the needed data producer(s) to produce the requested data.

In S220, the DCCF 24 informs the CM MnF 26 that a MOI is to be created for provisioning the MnS. In this connection, the DCCF 24 informs that an MDT job is to be created wherein the meta data instance information is also included. As consumer of the data, the DCCF 24 may be indicated.

In S225 and S230, the CM MnF 26 communicates with the indicated data producer(s) (in the present example only data producer B is used) for creating the MOI. In detail, in S225, the CM MnF 26 informs the data producer B in a provisioning MnS indication that a MOI with an MDT job is to be created wherein the meta data instance information is also provided. In S230, the data producer B confirms the successful MOI creation.

In S245, the CM MnF 26 confirms to the DCCF 24 the successful MOI creation indicated in S220.

In S250, the DCCF 24 creates a schema for the data to be produced (i.e. the MDT data in the present example). In other words, the DCCF 24 defines a nrRLFReport schema to be generated by the data producer(s) (here, data producer B).

In S255, the DCCF 24 informs the DSC MnF 40 that a data object is to be created for provisioning the MnS. In this connection, the DCCF 24 informs about the nrRLFReport schema. That is, the DSC MnF 40 receives a request from the DCCF 24 to provide a resource or an address where data, that will be produced later by the data producer B, shall be stored. The request contains the meta data for the data. It is to be noted that according to examples of embodiment the address is a URI, for example.

In reaction to the indication in S255, the DSC MnF 40 generates a schema describing the format in which the produced data and the associated meta data shall be stored into a data storage. For example, this schema can include an XML schema, a JSON schema or a YANG schema. Moreover, the DSC MnF 40 allocates an address for the storing of the data. This process include, for example, a selection of an appropriate data storage (in the present example, this is e.g. data storage 50). Alternatively, a new data storage can be created (e.g. in a cloud environment) in case no appropriate data storage exists. In REST, it may also mean creating a resource (identified by a URI) where the produced data will be written to and read from. The representation of this resource can then be described by the JSON schema generated by the DSC MnF, as described above.

Moreover, the DSC MnF 40 generates a query pattern for retrieving the stored data later. That is, the DSC MnF 40 specifies a read query and write query for accessing the data (e.g. the nrRLFReport) to be stored in the data storage.

In S260, the DSC MnF 40 returns to the DCF 24 the address and the defined data access schema (read query and write query of the nrRLFReport, for example).

In S265, the DCCF 24 registers the obtained information, i.e. the meta data instance, the address or ID (URI) of the data storage and the data access schema (read query, write query) in the repository 22 by using a provisioning message.

In S270, the repository 22 confirms to the DCCF 24 the successful registration.

In S273, the data producer (here data producer B) which is instructed to create the required data (in the present example the MDT data) starts the production of the date. For this, the data producer conducts a configuration processing according to the meta data instance being provided in S225, and activates the corresponding MDT job. It is to be noted that the processing in S273 is independent from the order of processing shown in Fig. 2, with the exception of S225, S230.

In S275, the data producer B sends the produced data to the DCCF 24, e.g. in the form of an MDT MnS report signaling including the data being produced, the meta data (or an identifier thereof, as indicated above), and an indication regarding a sub scope, such as a list of cells and the like.

In S280, the DCCF sends the produced data to the data storage 50 in which the data are to be stored. For this, a MDT MnS signaling for storing data is sent to the data storage 50, including e.g. the URI, the write query instance of the nrRLFReport data.

It is to be noted that the processing in S280, i.e. the storing of the produced data, can be also effected by data producer B, which can directly store the nrRLFReport data to the data storage. For this, it is required that the data storage URI and the writeQuery instance of the nrRLFReport data are indicated to the data producer B in advance, e.g. by the DCCF or the DSC MnF, when they are available.

Furthermore, it is to be noted that the processing of S275 and S280 is executed in a loop, i.e. the processing is executed per MDT data producer (in case more than one producer is involved) and per MDT report.

In S285, the DCCF 24 conducts a processing for transforming the data reported from the data producer B, for example, the RLF report data are combined. It is to be noted that S285 is optional and can also be omitted, depending on the system setting.

S290, the DCCF 24 sends the produced data to the (original) data consumer A. The report can also include the meta data instance.

Fig. 3 shows a signaling diagram explaining an example of embodiments where data, in the present example MDT data, are reused, i.e. reported from the data storage, rather than being newly produced. That is, Fig. 3 describes an example where the historical data are discovered and retrieved.

In Fig. 3, like in the example shown in Fig. 2, it is assumed that a data consumer A wants to get MDT data of a specific area (location) during a specific time period. The data consumer A knows only the network entity (here the DCCF) that, for the data consumer, plays the role of a data producer. Therefore, the data consumer A requests from the DCCF the production of the required MDT data.

In contrast to the example discussed in Fig. 2, here, the DCCF 24 knows that there may be such data available, which needs to be fetched simply from a data storage. Hence, the DCCF starts two tasks, that is (1) to resolve the URI of the piece of reusable data resource and (2) to activate a datamining job at the DSC MnF with the resolved URI and the combined meta data of the requested piece of data.

In addition, according to the present example, the CM MnF plays a role in which it is requested to create and activate an datamining job for DSC MnF so as to extract the needed piece of data with the registered URI(s) and the combined meta data. The datamining job at DSC MnF is used to extract the needed piece of data from the data storage according to the resolved URI and combined meta data of the requested piece of data. Then, the data storage provides the extracted data to DCCF which in turn can forward them to the data consumer.

In the signaling diagram according to Fig. 3, a process is described which includes the above described procedure E.

In S300, similar to S200 in Fig. 2, the data consumer 10 sends a request for data to the DCCF 24, which is in the present example related to MDF data. In the request message, as also indicated above, a scope indication regarding a time indication, such as a starting time (like 00.00 h on 1.12.2020 to 23.59 h on 31.12.2020), an interval for the data provision (e.g. seconds, minutes etc.) and the like, an indication of the purpose of the data (such as a set of supported technology, like 3GPP TS37.320 g00; MDT) and an indication regarding a data name (such as nrRLFReport) are provided.

In S305, the DCCF 24 forms a request for data, including meta data of the data. That is, a meta data instance is formed including, for example, the information obtained in S300, i.e. the scope indication obtained in the request from the data consumer in S200, like time, purpose and data name.

In S310, the request formed in S305 is sent to the repository 22 by means of an indication regarding provisioning of a management service. In the indication, the repository 22 is informed, for example, about the meta data instance.

Since the needed piece of data has been stored in data storage (e.g. in a process as described in connection with Fig. 2) and has been registered to the repository 22, the data only need to be fetched from the data storage, without the need to produce it. Consequently, the repository 22 can resolve the meta data into the URI(s) of the relevant data storage and responds to the DCCF's request in S315 in form of a provisioning MnS response message with the registered URI(s) where the needed data can be retrieved, i.e. a read query of the nrRLFReport..

In S320, the DCCF 24 indicates to the CM MnF 26 that a MOI is to be created for provisioning the MnS. In this connection, the DCCF 24 informs that an datamining job is to be created wherein the meta data instance information, the URI(s) and the read query of the nrRLFReport are also included. As consumer of the data, the DCCF 24 may be indicated. In other words, the DCCF 24 requests CM MnF 26 to create and activate a datamining job via the DSC MnF 40.

In S325 and S330, the CM MnF 40 communicates with the DSC MnF 40. Specifically, in S325. In detail, in S325, the CM MnF 26 informs the DSC MnF 40 in a provisioning MnS indication that a MOI with an datamining job is to be created wherein the meta data instance information, the URI(s) and the read query of the nrRLFReport are also included. Furthermore, it is defined that the DCCF is the call-back entity. In S330, the DSC MnF confirms the successful MOI creation.

In S335, the CM MnF 26 confirms to the DCCF 24 the successful MOI creation indicated in S330.

In S340, the DSC MNF 40 starts the datamining job. For this, the DSC MnF 40 conducts a configuration processing with the data storage 50 according to the meta data instance being provided in S325, and activates the datamining job for retrieving the requested data. In this context, the DSC MnF 40 informs the data storage 50 also about the DCCF being the call-back entity, and indicates the read query of the nrRLFReport.

In S345, the data storage 50 sends the historical data extracted in the datamining back to the DCCF 24, e.g. in the form of a data storage MnS report signaling including the data being retrieved and the meta data (or an identifier thereof, as indicated above).

In S350, the DCCF 24 conducts a processing for transforming the data reported from the data storage, for example, the report data are combined. It is to be noted that S285 is optional and can also be omitted, depending on the system setting.

In S355, the DCCF 24 sends the reported data to the (original) data consumer A. The report can also include the meta data instance.

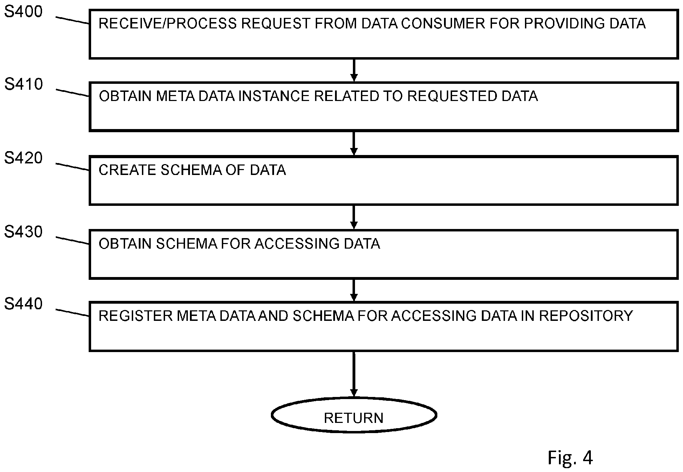

Fig. 4 shows a flow chart of a processing executed by a data collection coordination function (DCCF) 24 which is e.g. part of the management system 20 of Fig. 1, as described above. That is, Fig. 4 shows a flowchart related to a processing conducted by a network element or function in a communication network which is used coordinate the data collection in a process for storing and retrieving historical data, as also described in connection with Figs. 2 and 3. As indicated above, the communication network may be based on a 3GPP standard. However, also other communication standards can be used, according to other examples of embodiments. Furthermore, the data being requested are related, for example, to diagnostic and troubleshooting as a processing to be conducted by the data consumer, wherein the data may be also for other purposes.

In S400, the DCCF receives, from a data consumer, e.g. data consumer A, a request for providing data from a data source for processing by the data consumer, and to process the request. This corresponds, for example, the processing related to S200 in Fig. 2.

According to examples of embodiments, the request includes at least one of a geographic location or an indication of a network part to which the requested data are to be related, at least one of a time indication or a time period to which the requested data are to be related, and a purpose of the data, e.g. as described in connection with S200 in Fig. 2.

In S410, the DCCF obtains, from a configuration management function, such as CM MnF 26, a meta data instance related to the requested data, as described above in connection with S210, S213, and S215 in Fig. 2.

In S420, the DCCF creates a schema of the requested data based on the meta data instance, as described above, for example, in connection with S250 (i.e. the schema of the specified MDT data nrRLFReport, for example).

Furthermore, in S430, the DCCF obtains a schema for accessing the data being provided by a data source for making the data reusable as history data. This is in correspondence, for example, with the processing described in connection with S255 and S260 in Fig. 2 and concerns, for example, the provision of URI, write and read query as access schema for the nrRLFReport data instance being produced.

In S440, the DCCF registers the obtained meta data instance and the schema for accessing the data in a repository, such as repository 22, as described in connection with S265 and S270 in Fig. 2.

According to some further examples of embodiments, when obtaining the meta data instance related to the requested data e.g. from the CM MnF 26 in S410, there is provided also an identification of at least one data source being able to produce the requested data, such as of data producer B. Then, the DCCF sends an indication to create a managed object instance to the CM MnF 26 based in the received identification of the data source being able to produce the requested data, as described, for example, in connection with S220 to S245 in Fig. 2. Later, the DCCF receives the requested data being produced from the data source (i.e. data producer B, for example), as described in connection with S275 in Fig. 2, and forwards the received data to the data consumer, as described in S290 in Fig. 2. In addition, according to some examples of embodiments, when the DCCF receives the requested data being produced from the data source, the data are also stored in a data storage in accordance with the schema for accessing the data, as described in connection with S280 in Fig. 2.

The DCCF conducts also a processing as described in connection with Fig. 3. Specifically, the DCCF determines, when a request for providing data from a data source for processing by the data consumer is received, whether the requested data are available as history data, as described above in connection with S300 in Fig. 3. Then, in case the determination is affirmative, the DCCF requests the repository to resolve a meta data instance generated on the basis of the request, as described above in connection with S305 and S310 in Fig. 3. Then, the DCCF obtains an indication of data resources for history data corresponding to the requested data, as indicated in connection with S315 in Fig. 3. Thereafter, the DCCF requests a datamining job for the history data at a data store control management function (DSC MnF 40), as described in connection with S320 to S335 in Fig. 3.

When the DCCF receives the history data from a data storage, as indicated in connection with S345 in Fig. 3, it forwards the history data to the data consumer, as described in connection with S355 in Fig. 3.

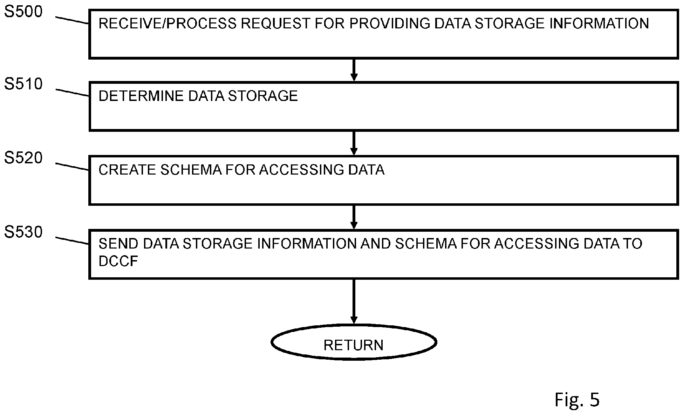

Fig. 5 shows a flow chart of a processing executed by a data store control management function (DSC MnF) 40 of Fig. 1, as described above. That is, Fig. 5 shows a flowchart related to a processing conducted by a network element or function in a communication network which is used to control a data storage for storing and retrieving historical data, as also described in connection with Figs. 2 and 3. As indicated above, the communication network may be based on a 3GPP standard. However, also other communication standards can be used, according to other examples of embodiments.

In S500, the DSC MnF receives, from a data collection coordination function such as DCCF 24, a request for providing information regarding a data storage in which data being provided by a data source for making the data reusable as history data can be stored. The request comprises, for example, a schema of the data based on a meta data instance related to the data to be stored. For example, the processing in S500 is in accordance with the processing described above in connection with S255 in Fig. 2.

In S510, the DSC MnF determines a data storage being suitable for the request. According to examples of embodiments, for determining the data storage, an existing data storage being suitable for storing the data can be selected, or a new data storage being suitable for storing the data can be created.

In S520, the DSC MnF creates a schema for accessing the data, as described, for example, in connection with S255 in Fig. 2. That is, the schema for accessing the data comprises a resource identifier (e.g. URI), a read query instance and a write query instance. According to examples of embodiments, the schema for accessing the data includes one of an XML schema, a JSON schema and a YANG schema.

Then, in S530, the DSC MnF sends an indication of the determined data storage and the schema for accessing the data to the DCCF, as described in connection with S260 in Fig. 2, for example.

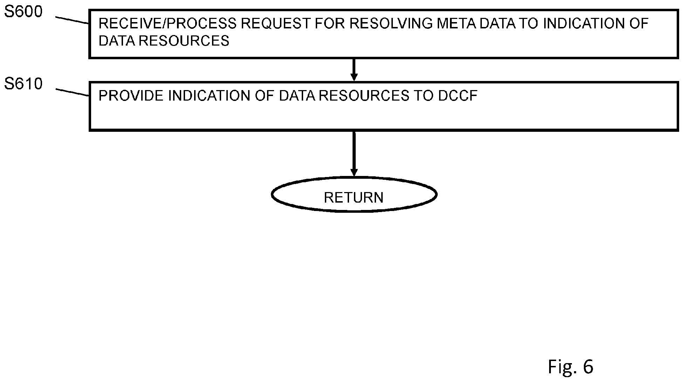

Fig. 6 shows a flow chart of a processing executed by a repository 22 of Fig. 1, as described above. That is, Fig. 6 shows a flowchart related to a processing conducted by a network element or function in a communication network which is used to register information used for storing and retrieving historical data, as also described in connection with Figs. 2 and 3. As indicated above, the communication network may be based on a 3GPP standard. However, also other communication standards can be used, according to other examples of embodiments.

In S600, the repository receives, from a data collection coordination function, such as DCCF 24, a request to resolve a meta data instance, generated on the basis of a request for providing data, to an indication of data resources for the data corresponding to the requested data. In the processing in S600, a processing corresponding to that described in connection with S310 in Fig. 3 is conducted.

In the processing in S600, according to some examples of embodiments, the repository is configured to determine, as the data resources for the data corresponding to the requested data, one of a data producer capable of producing the data (e.g. data producer B) or a data storage (e.g. storage 50) storing history data corresponding to the requested data.

In S610, the repository provides, to the DCCF 24, the indication of the data resources for the data, as also described in connection with S315 in Fig. 3..

According to examples of embodiments, the repository receives, from the DCCF 24, also a request to register a meta data instance and a schema for accessing data being provided by a data source for making the data reusable as history data. This processing is in correspondence with the processing described in connection with SS265 and S270 in Fig. 2, for example. The request to resolve the meta data received in S600 is processed on the basis of the information obtained in the registering.

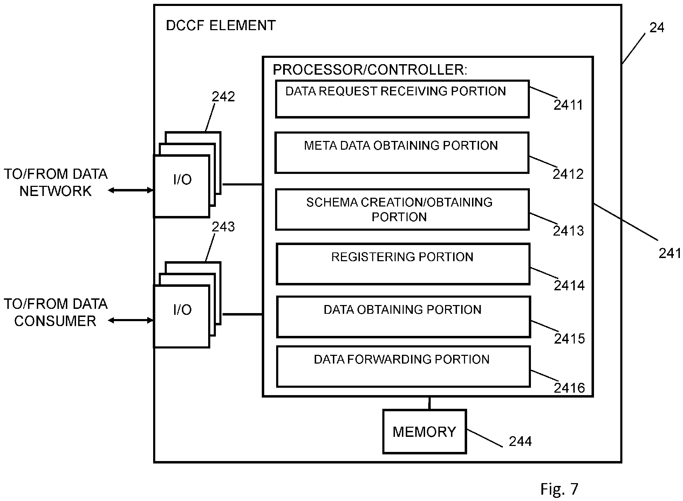

Fig. 7 shows a diagram of a communication element or function usable as a data collection coordination function (DCCF) 24 according to some examples of embodiments, as described in connection with Figs. 1 to 3, which is configured to conduct a processing according to examples of embodiments of the disclosure. It is to be noted that the network element or function usable as the DCCF 24 may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The DCCF 24 shown in Fig. 7 may include a processing circuitry, a processing function, a control unit or a processor 241, such as a CPU or the like, which is suitable for executing instructions given by programs or the like related to the control procedure. The processor 241 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 242 and 243 denote input/output (I/O) units or functions (interfaces) connected to the processor or processing function 241. The I/O units 242 may be used for communicating with the data network, such as parts of the management system 20, the DSC MnF 40 and the data storage 50 as shown in Figs. 1 to 3. The I/O units 243 may be used for communicating with the data consumers, such as data consumer A shown in Figs. 1 to 3. The I/O units 242 and 243 may be combined units including communication equipment towards several entities, or may include a distributed structure with a plurality of different interfaces for different entities. Reference sign 244 denotes a memory usable, for example, for storing data and programs to be executed by the processor or processing function 241 and/or as a working storage of the processor or processing function 241. It is to be noted that the memory 244 may be implemented by using one or more memory portions of the same or different type of memory.

The processor or processing function 241 is configured to execute processing related to the above described control processing. In particular, the processor or processing circuitry or function 241 includes one or more of the following sub-portions. Sub-portion 2411 is a processing portion which is usable as a portion for receiving a request for data. The portion 2411 may be configured to perform processing according to S400 of Fig. 4. Furthermore, the processor or processing circuitry or function 241 may include a sub-portion 2412 usable as a portion for obtaining meta data instance. The portion 2412 may be configured to perform a processing according to S410 of Fig. 4. In addition, the processor or processing circuitry or function 241 may include a sub-portion 2413 usable as a portion for creating and obtaining a schema for data. The portion 2413 may be configured to perform a processing according to S420 and S430 of Fig. 4. Furthermore, the processor or processing circuitry or function 241 may include a sub-portion 2414 usable as a portion for registering meta data and schema. The portion 2414 may be configured to perform a processing according to S440 of Fig. 4. Furthermore, the processor or processing circuitry or function 241 may include a sub-portion 2415 usable as a portion for obtaining data, e.g. from a data producer or a data storage, and a sub-portion 2416 usable as a portion for forwarding data to a data consumer.

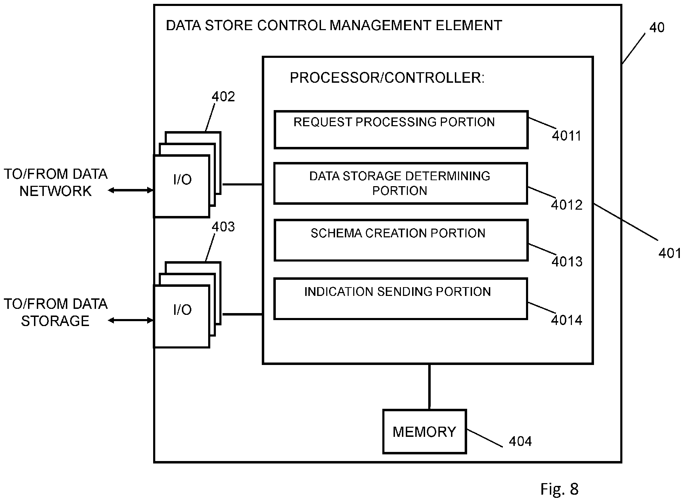

Fig. 8 shows a diagram of a network element or function usable as a data store control management element 40, which may be also part, for example, of the management system 20 shown in Fig. 1, and which is configured to conduct a processing according to examples of embodiments of the disclosure. It is to be noted that the network element or function being used may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The data store control management element or function 40 shown in Fig. 8 may include a processing circuitry, a processing function, a control unit or a processor 401, such as a CPU or the like, which is suitable for executing instructions given by programs or the like related to the control procedure. The processor 401 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 402 and 403 denote input/output (I/O) units or functions (interfaces) connected to the processor or processing function 401. The I/O units 402 may be used for communicating with a data network, i.e. network parts located, for example, in the management system 20. The I/O units 403 may be used for communicating with a data storage 50. The I/O units 402 and 403 may be combined units including communication equipment towards several entities, or may include a distributed structure with a plurality of different interfaces for different entities. Reference sign 404 denotes a memory usable, for example, for storing data and programs to be executed by the processor or processing function 401 and/or as a working storage of the processor or processing function 401. It is to be noted that the memory 404 may be implemented by using one or more memory portions of the same or different type of memory.

The processor or processing function 401 is configured to execute processing related to the above described management control processing. In particular, the processor or processing circuitry or function 401 includes at least one or more of the following sub-portions. Sub-portion 4011 is a processing portion which is usable as a portion for processing a request for providing data storage information. The portion 4011 may be configured to perform processing according to S500 of Fig. 5. Furthermore, the processor or processing circuitry or function 401 may include a sub-portion 4012 usable as a portion for determining a data storage. The portion 4012 may be configured to perform a processing according to S510 of Fig. 5. In addition, the processor or processing circuitry or function 401 may include a sub-portion 4013 usable as a portion for creating a schema for accessing data. The portion 4013 may be configured to perform a processing according to S520 of Fig. 5. Furthermore, the processor or processing circuitry or function 401 may include a sub-portion 4014 usable as a portion for sending an indication. The portion 4014 may be configured to perform a processing according to S530 of Fig. 5.

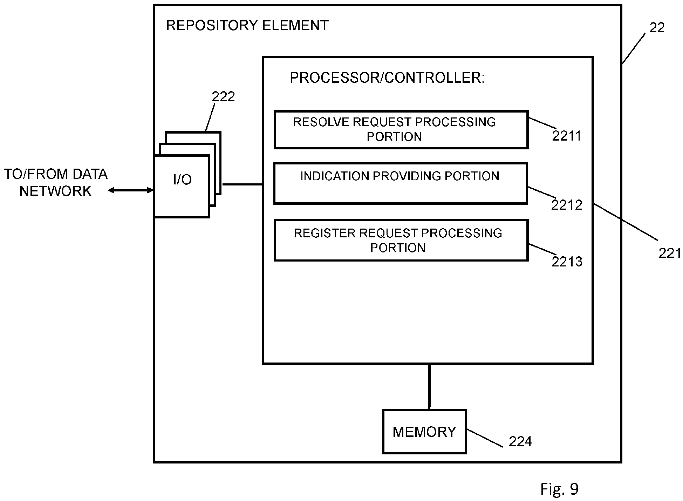

Fig. 9 shows a diagram of a communication element or function usable as a repository 22 according to some examples of embodiments, as described in connection with Figs. 1 to 3, which is configured to conduct a processing according to examples of embodiments of the disclosure. It is to be noted that the network element or function usable as the repository 22 may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The repository 22 shown in Fig. 9 may include a processing circuitry, a processing function, a control unit or a processor 221, such as a CPU or the like, which is suitable for executing instructions given by programs or the like related to the control procedure. The processor 221 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 222 denotes input/output (I/O) units or functions (interfaces) connected to the processor or processing function 221. The I/O units 222 may be used for communicating with the data network, such as the management system 20 shown in Fig. 1. The I/O units 222 may be combined units including communication equipment towards several entities, or may include a distributed structure with a plurality of different interfaces for different entities. Reference sign 224 denotes a memory usable, for example, for storing data and programs to be executed by the processor or processing function 221 and/or as a working storage of the processor or processing function 221. It is to be noted that the memory 224 may be implemented by using one or more memory portions of the same or different type of memory. The processor or processing function 221 is configured to execute processing related to the above described control processing. In particular, the processor or processing circuitry or function 221 includes one or more of the following sub-portions. Sub-portion 2211 is a processing portion which is usable as a portion for receiving and processing a resolve request. The portion 2211 may be configured to perform processing according to S600 of Fig. 6. Furthermore, the processor or processing circuitry or function 221 may include a sub-portion 2212 usable as a portion for providing am indication. The portion 2212 may be configured to perform a processing according to S610 of Fig. 6. Furthermore, the processor or processing circuitry or function 221 may include a sub-portion 2213 usable as a portion for receiving and processing a registering request.

It is to be noted that examples of embodiments of the disclosure are applicable to various different network configurations. In other words, the examples shown in the above described figures, which are used as a basis for the above discussed examples, are only illustrative and the scope of protection is solely defined by the appended claims.

According to a further example , there is provided, for example, an apparatus for use by a communication network element or function configured to act as a data collection coordination function in a communication network, the apparatus comprising means configured to receive, from a data consumer, a request for providing data from a data source for processing by the data consumer, and to process the request, means configured to obtain, from a configuration management function, a meta data instance related to the requested data, means configured to create a schema of the requested data based on the meta data instance, means configured to obtain a schema for accessing the data being provided by a data source for making the data reusable as history data, and means configured to register the obtained meta data instance and the schema for accessing the data in a repository.

Furthermore, according to some other examples, the above defined apparatus may further comprise means for conducting at least one of the processing defined in the above described methods, for example a method according to that described in connection with Fig. 4.

According to a further example, there is provided, for example, an apparatus for use by a communication network element or function configured to act as a data store controlling function in a communication network, the apparatus comprising means configured to receive, from a data collection coordination function, a request for providing information regarding a data storage in which data being provided by a data source for making the data reusable as history data can be stored, wherein the request comprises a schema of the data based on a meta data instance related to the data to be stored, and to process the request, means configured to determine a data storage being suitable for the request, means configured to create a schema for accessing the data, and means configured to send an indication of the determined data storage and the schema for accessing the data to the data collection coordination function.

Furthermore, according to some other examples, the above defined apparatus may further comprise means for conducting at least one of the processing defined in the above described methods, for example a method according to that described in connection with Fig. 5.

According to a further example, there is provided, for example, an apparatus for use by a communication network element or function configured to act as a repository in a communication network, the apparatus comprising means configured to receive, from a data collection coordination function, a request to resolve a meta data instance, generated on the basis of a request for providing data, to an indication of data resources for the data corresponding to the requested data, and to process the request, and means configured to provide, to the data collection coordination function, the indication of the data resources for the data.

Furthermore, according to some other examples, the above defined apparatus may further comprise means for conducting at least one of the processing defined in the above described methods, for example a method according to that described in connection with Fig. 6.

According to a further example, there is provided, for example, a non-transitory computer readable medium comprising program instructions for causing an apparatus to perform, when used in a communication network element or function configured to act as a data collection coordination function in a communication network, a processing comprising receiving, from a data consumer, a request for providing data from a data source for processing by the data consumer, and processing the request, obtaining, from a configuration management function, a meta data instance related to the requested data, creating a schema of the requested data based on the meta data instance, obtaining a schema for accessing the data being provided by a data source for making the data reusable as history data, and registering the obtained meta data instance and the schema for accessing the data in a repository.

According to a further example, there is provided, for example, a non-transitory computer readable medium comprising program instructions for causing an apparatus to perform, when used in a communication network element or function configured to act as a data store controlling function in a communication network, a processing comprising receiving, from a data collection coordination function, a request for providing information regarding a data storage in which data being provided by a data source for making the data reusable as history data can be stored, wherein the request comprises a schema of the data based on a meta data instance related to the data to be stored, and processing the request, determining a data storage being suitable for the request, creating a schema for accessing the data, and sending an indication of the determined data storage and the schema for accessing the data storage to the data collection coordination function.

According to a further example , there is provided, for example, a non-transitory computer readable medium comprising program instructions for causing an apparatus to perform, when used in a communication network element or function configured to act as a repository in a communication network, a processing comprising receiving, from a data collection coordination function, a request to resolve a meta data instance, generated on the basis of a request for providing data, to an indication of data resources for the data corresponding to the requested data, and processing the request, and providing, to the data collection coordination function, the indication of the data resources for the data.

By means of embodiments of the present invention, it is possible to provide a mechanism allowing to register, discover and retrieve data, in particular so-called historical data indicating events or measurements of the past, in a communication network based on e.g. 3GPP standards. Specifically, means for obtaining historical data needed, for example, for artificial intelligence based processing in troubleshooting and diagnostic procedures as well as analytics application in network management and control are provided. That is, movement of data to applications that may be coming from different vendors is supported.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, Bluetooth, Infrared, and the like may be used; additionally, embodiments may also apply wired technologies, e.g. IP based access technologies like cable networks or fixed lines.
- embodiments suitable to be implemented as software code or portions of it and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- embodiments may also be implemented as computer program products, including a computer usable medium having a computer readable program code embodied therein, the computer readable program code adapted to execute a process as described in embodiments, wherein the computer usable medium may be a non-transitory medium.

Although the present disclosure has been described herein before with reference to particular embodiments thereof, the present disclosure is not limited thereto and the scope of protection is solely defined by the appended claims.

## Claims

1. An apparatus for use by a communication network element or function configured to act as a data collection coordination function (24) in a communication network, the apparatus comprising
at least one processing circuitry (241), and
at least one memory (244) for storing instructions to be executed by the processing circuitry (241),
wherein the at least one memory and the instructions are configured to, with the at least one processing circuitry, cause the apparatus at least:
to receive, from a data consumer (10), a request for providing data for processing by the data consumer (10), and
to process the request, the processing including
to determine whether the requested data are available as history data,
in case the determination is negative, to obtain, from a configuration management function (26), a meta data instance related to the requested data,
to create a schema of the requested data based on the meta data instance,
to obtain a schema for accessing the data being provided by a data source (30) for making the data reusable as history data, and
to register the obtained meta data instance and the schema for accessing the data in a repository (22),
wherein
in case the determination whether the requested data are available as history data is affirmative, the processing further includes
to request the repository (22) to resolve the meta data instance generated on the basis of the request,
to obtain an indication of data resources for history data corresponding to the requested data,
to request a datamining job for the history data at a data store control management function (40),
to receive the history data from a data storage (50), and
to forward the history data to the data consumer (10).

2. The apparatus according to claim 1, wherein the at least one memory (244) and the instructions are further configured to, with the at least one processing circuitry (241), cause the apparatus at least:
to obtain, with the meta data instance related to the requested data, from the configuration management function (26), an identification of at least one data source (30) being able to produce the requested data,
to send an indication to create a managed object instance to the configuration management function (26) of the communication network based in the received identification of the data source (30) being able to produce the requested data,
to receive the requested data being produced from the data source (30), and
to forward the received data to the data consumer (10).

3. The apparatus according to claim 2, wherein the at least one memory (244) and the instructions are further configured to, with the at least one processing circuitry (241), cause the apparatus at least:
to store, when the requested data being produced from the data source (30) are received, the data in a data storage (50) in accordance with the schema for accessing the data.

4. The apparatus according to any of claims 1 to 3, wherein the request includes at least one of a geographic location or an indication of a network part to which the requested data are to be related, at least one of a time indication or a time period to which the requested data are to be related, and a purpose of the data.

5. The apparatus according to any of claims 1 to 4, wherein the communication network is based on a 3GPP standard and the data being requested are related to diagnostic and troubleshooting as the processing by the data consumer (10).

6. A method for use in a communication network element or function configured to act as a data collection coordination function (24) in a communication network, the method comprising
Receiving (S400), from a data consumer (10), a request for providing data for processing by the data consumer (10), and
processing (S400) the request, the processing including
determining whether the requested data are available as history data,
in case the determination is negative,
obtaining (S410), from a configuration management function (26), a meta data instance related to the requested data,
creating (S420) a schema of the requested data based on the meta data instance,
obtaining (S430) a schema for accessing the data being provided by a data source (30) for making the data reusable as history data, and
registering (S440) the obtained meta data instance and the schema for accessing the data in a repository (22),
wherein
in case the determination whether the requested data are available as history data is affirmative, the processing (S400) further includes
requesting (S310) the repository (22) to resolve the meta data instance generated on the basis of the request,
obtaining (S315) an indication of data resources for history data corresponding to the requested data,
requesting (S320) a datamining job for the history data at a data store control management function (40),
receiving (S345) the history data from a data storage (50), and
forwarding (S355) the history data to the data consumer (10).

7. An apparatus for use by a communication network element or function configured to act as a data store controlling function (40) in a communication network, the apparatus comprising
at least one processing circuitry (401), and
at least one memory (404) for storing instructions to be executed by the processing circuitry (401),
wherein the at least one memory (404) and the instructions are configured to, with the at least one processing circuitry (401), cause the apparatus at least:
to receive, from a data collection coordination function (24), a request for providing information regarding a data storage in which data being provided by a data source (30) for making the data reusable as history data can be stored, wherein the request comprises a schema of the data based on a meta data instance related to the data to be stored, and
to process the request, the processing including
to determine a data storage (50) being suitable for the request,
to create a schema for accessing the data, and
to send an indication of the determined data storage (50) and the schema for accessing the data to the data collection coordination function (24).

8. The apparatus according to claim 7, wherein
the schema for accessing the data comprises a resource identifier, a read query instance and a write query instance, and
the schema for accessing the data includes one of an XML schema, a JSON schema and a YANG schema.

9. The apparatus according to claim 7, wherein the at least one memory (404) and the instructions are further configured to, with the at least one processing circuitry (401), cause the apparatus at least:
for determining the data storage (50), to select an existing data storage being suitable for storing the data, or to create a new data storage being suitable for storing the data.

10. A method for use in a communication network element or function configured to act as a data store controlling function (40) in a communication network, the method comprising
receiving (S500), from a data collection coordination function (24), a request for providing information regarding a data storage in which data being provided by a data source (30) for making the data reusable as history data can be stored, wherein the request comprises a schema of the data based on a meta data instance related to the data to be stored, and
processing (S500) the request, the processing including
determining (S510) a data storage (50) being suitable for the request,
creating (S520) a schema for accessing the data, and
sending (S530) an indication of the determined data storage (50) and the schema for accessing the data storage (50) to the data collection coordination function (24).

11. An apparatus for use by a communication network element or function configured to act as a repository (22) in a communication network, the apparatus comprising
at least one processing circuitry (221), and
at least one memory (224) for storing instructions to be executed by the processing circuitry (221),
wherein the at least one memory (224) and the instructions are configured to, with the at least one processing circuitry (221), cause the apparatus at least:
to receive, from a data collection coordination function (24), a request to resolve a meta data instance, generated on the basis of a request for providing data, to an indication of data resources for the data corresponding to the requested data, and
to process the request to resolve, the processing comprising
to provide, to the data collection coordination function (24), the indication of the data resources for the data,
to receive, from the data collection coordination function (24), a request to register a meta data instance and a schema for accessing data being provided by a data source (30) for making the data reusable as history data,
and to process the request to register, wherein the request to resolve the meta data instance is processed on the basis of the information obtained in the registering.

12. The apparatus according to claim 11, wherein the at least one memory (224) and the instructions are further configured to, with the at least one processing circuitry (221), cause the apparatus at least:
to determine, as the data resources for the data corresponding to the requested data, one of a data producer (30) capable of producing the data, and a data storage (50) storing history data corresponding to the requested data.

13. A method for use in a communication network element or function configured to act as a repository (22) in a communication network, the method comprising
receiving (S600), from a data collection coordination function (24), a request to resolve a meta data instance, generated on the basis of a request for providing data, to an indication of data resources for the data corresponding to the requested data, and
processing (S600) the request to resolve the processing comprising providing (S610), to the data collection coordination function (24), the indication of the data resources for the data,
receiving, from the data collection coordination function (24), a request to register a meta data instance and a schema for accessing data being provided by a data source (30) for making the data reusable as history data, and
processing the request to register, wherein the request to resolve the meta data instance is processed on the basis of the information obtained in the registering.

14. A computer program product for a computer, including software code portions for performing the steps of any of claims 6, 10 or 13, when said product is run on the computer.

15. The computer program product according to claim 14, wherein
the computer program product includes a computer-readable medium on which said software code portions are stored, and/or
the computer program product is directly loadable into the internal memory of the computer and/or transmittable via a network by means of at least one of upload, download and push procedures.

## Patentansprüche

1. Vorrichtung zur Verwendung durch ein Kommunikationsnetzwerkelement oder eine Kommunikationsnetzwerkfunktion, das bzw. die dazu ausgelegt ist, als eine Datensammlungskoordinierungsfunktion (24) in einem Kommunikationsnetzwerk zu fungieren, wobei die Vorrichtung Folgendes umfasst
mindestens eine Verarbeitungsschaltung (241), und
mindestens einen Speicher (244) zum Speichern von Anweisungen, die von der Verarbeitungsschaltung (241) auszuführen sind,
wobei der mindestens eine Speicher und die Anweisungen dazu ausgelegt sind, die Vorrichtung mit der mindestens einen Verarbeitungsschaltung mindestens zu Folgendem zu veranlassen:
Empfangen einer Anforderung zum Bereitstellen von Daten zum Verarbeiten durch einen Datenverbraucher (10) vom Datenverbraucher (10), und
Verarbeiten der Anforderung, wobei das Verarbeiten Folgendes beinhaltet
Bestimmen, ob die angeforderten Daten als Verlaufsdaten verfügbar sind,
in einem Fall, in dem die Bestimmung negativ ist, Erhalten einer Metadateninstanz, die sich auf die angeforderten Daten bezieht, von einer Auslegungsverwaltungsfunktion (26),
Erstellen eines Schemas der angeforderten Daten auf Basis der Metadateninstanz,
Erhalten eines Schemas zum Zugreifen auf die Daten, die von einer Datenquelle (30) bereitgestellt werden, um die Daten als Verlaufsdaten wiederverwendbar zu machen, und
Registrieren der erhaltenen Metadateninstanz und des Schemas zum Zugreifen auf die Daten in einem Repositorium (22),
wobei
in einem Fall, in dem die Bestimmung, ob die angeforderten Daten als Verlaufsdaten verfügbar sind, positiv ist, das Verarbeiten ferner Folgendes beinhaltet
Anfordern des Repositoriums (22), um die Metadateninstanz, die auf Basis der Anforderung erzeugt wurde, aufzulösen,
Erhalten einer Anzeige von Datenressourcen für Verlaufsdaten, die den angeforderten Daten entsprechen,
Anfordern eines Dataminingjobs für die Verlaufsdaten an einer Datenspeichersteuerverwaltungsfunktion (40),
Empfangen der Verlaufsdaten von einem Datenspeicher (50), und
Weiterleiten der Verlaufsdaten zum Datenverbraucher (10),

2. Vorrichtung nach Anspruch 1, wobei der mindestens eine Speicher (244) und die Anweisungen ferner dazu ausgelegt sind, die Vorrichtung mit der mindestens einen Verarbeitungsschaltung (241) mindestens zu Folgendem zu veranlassen:
Erhalten einer Identifikation mindestens einer Datenquelle (30), die in der Lage ist, die angeforderten Daten zu produzieren, mit der Metadateninstanz, die sich auf die angeforderten Daten bezieht, von der Auslegungsverwaltungsfunktion (26),
Senden einer Anzeige zum Erstellen einer verwalteten Objektinstanz an die Auslegungsverwaltungsfunktion (26) des Kommunikationsnetzwerks auf Basis der empfangenen Identifikation der Datenquelle (30), die in der Lage ist, die angeforderten Daten zu produzieren,
Empfangen der angeforderten Daten, die von der Datenquelle (30) produziert werden, und
Weiterleiten der empfangenen Daten zum Datenverbraucher (10) .

3. Vorrichtung nach Anspruch 2, wobei der mindestens eine Speicher (244) und die Anweisungen ferner dazu ausgelegt sind, die Vorrichtung mit der mindestens einen Verarbeitungsschaltung (241) mindestens zu Folgendem zu veranlassen:
Speichern der Daten gemäß dem Schema zum Zugreifen auf die Daten in einem Datenspeicher (50), wenn die angeforderten Daten, die von der Datenquelle (30) produziert werden, empfangen werden.

4. Vorrichtung nach einem der Ansprüche 1 bis 3, wobei die Anforderung mindestens eines von einem geografischen Standort oder einer Anzeige eines Netzwerkteils, auf den sich die angeforderten Daten beziehen sollen, mindestens eines von einer Zeitanzeige oder einer Zeitperiode, auf die sich die angeforderten Daten beziehen sollen, und einem Zweck der Daten beinhaltet.

5. Vorrichtung nach einem der Ansprüche 1 bis 4, wobei das Kommunikationsnetzwerk auf einem 3GPP-Standard basiert und die angeforderten Daten sich auf eine Diagnose und eine Fehlersuche als das Verarbeiten durch den Datenverbraucher (10) beziehen.

6. Verfahren zur Verwendung in einem Kommunikationsnetzwerkelement oder einer Kommunikationsnetzwerkfunktion, das bzw. die dazu ausgelegt ist, als eine Datensammlungskoordinierungsfunktion (24) in einem Kommunikationsnetzwerk zu fungieren, wobei das Verfahren Folgendes umfasst
Empfangen (S400) einer Anforderung zum Bereitstellen von Daten zum Verarbeiten durch einen Datenverbraucher (10) vom Datenverbraucher (10), und
Verarbeiten (S400) der Anforderung, wobei das Verarbeiten Folgendes beinhaltet
Bestimmen, ob die angeforderten Daten als Verlaufsdaten verfügbar sind,
in einem Fall, in dem die Bestimmungen negativ ist,
Erhalten (S410) einer Metadateninstanz, die sich auf die angeforderten Daten bezieht, von einer Auslegungsverwaltungsfunktion (26),
Erstellen (S420) eines Schemas der angeforderten Daten auf Basis der Metadateninstanz,
Erhalten (S430) eines Schemas zum Zugreifen auf die Daten, die von einer Datenquelle (30) bereitgestellt werden, um die Daten als Verlaufsdaten wiederverwendbar zu machen, und
Registrieren (S440) der erhaltenen Metadateninstanz und des Schemas zum Zugreifen auf die Daten in einem Repositorium (22),
wobei
in einem Fall, in dem die Bestimmung, ob die angeforderten Daten als Verlaufsdaten verfügbar sind, positiv ist, das Verarbeiten (S400) ferner Folgendes beinhaltet
Anfordern (S310) des Repositoriums (22), um die Metadateninstanz, die auf Basis der Anforderung erzeugt wurde, aufzulösen,
Erhalten (S315) einer Anzeige von Datenressourcen für Verlaufsdaten, die den angeforderten Daten entsprechen,
Anfordern (S320) eines Dataminingjobs für die Verlaufsdaten an einer Datenspeichersteuerverwaltungsfunktion (40),
Empfangen (S345) der Verlaufsdaten von einem Datenspeicher (50), und
Weiterleiten (S355) der Verlaufsdaten zum Datenverbraucher (10) .

7. Vorrichtung zur Verwendung durch ein Kommunikationsnetzwerkelement oder eine Kommunikationsnetzwerkfunktion, das bzw. die dazu ausgelegt ist, als eine Datenspeichersteuerfunktion (40) in einem Kommunikationsnetzwerk zu fungieren, wobei die Vorrichtung Folgendes umfasst
mindestens eine Verarbeitungsschaltung (401), und
mindestens einen Speicher (404) zum Speichern von Anweisungen, die von der Verarbeitungsschaltung (401) auszuführen sind,
wobei der mindestens eine Speicher (404) und die Anweisungen dazu ausgelegt sind, die Vorrichtung mit der mindestens einen Verarbeitungsschaltung (401) zu Folgendem zu veranlassen:
Empfangen einer Anforderung zum Bereitstellen von Informationen, die sich auf einen Datenspeicher beziehen, in dem Daten, die von einer Datenquelle (30) bereitgestellt werden, um die Daten als Verlaufsdaten wiederverwendbar zu machen, gespeichert werden können, von einer Datensammlungskoordinierungsfunktion (24), wobei die Anforderung ein Schema der Daten auf Basis der Metadateninstanz umfasst, die sich auf die zu speichernden Daten bezieht, und
Verarbeiten der Anforderung, wobei das Verarbeiten Folgendes beinhaltet
Bestimmen eines für die Anforderungen geeigneten Datenspeichers (50),
Erstellen eines Schemas zum Zugreifen auf die Daten, und
Senden einer Anzeige des bestimmten Datenspeichers (50) und des Schemas zum Zugreifen auf die Daten an die Datensammlungskoordinierungsfunktion (24).

8. Vorrichtung nach Anspruch 7, wobei
das Schema zum Zugreifen auf die Daten eine Ressourcenkennung, eine Leseabfrageinstanz und eine Schreibabfrageinstanz umfasst, und
das Schema zum Zugreifen auf die Daten eines von einem XML-Schema, einem JSON-Schema und einem YANG-Schema beinhaltet.

9. Vorrichtung nach Anspruch 7, wobei der mindestens eine Speicher (404) und die Anweisungen ferner dazu ausgelegt sind, die Vorrichtung mit der mindestens einen Verarbeitungsschaltung (401) mindestens zu Folgendem zu veranlassen:
zum Bestimmen des Datenspeichers (50) Auswählen eines vorhandenen Datenspeichers, der zum Speichern der Daten geeignet ist, oder Erstellen eines neuen Datenspeichers, der zum Speichern der Daten geeignet ist.

10. Verfahren zur Verwendung in einem Kommunikationsnetzwerkelement oder einer Kommunikationsnetzwerkfunktion, das bzw. die dazu ausgelegt ist, als eine Datenspeichersteuerfunktion (40) in einem Kommunikationsnetzwerk zu fungieren, wobei das Verfahren Folgendes umfasst
Empfangen (S500) einer Anforderung zum Bereitstellen von Informationen, die sich auf einen Datenspeicher beziehen, in dem Daten, die von einer Datenquelle (30) bereitgestellt werden, um die Daten als Verlaufsdaten wiederverwendbar zu machen, gespeichert werden können, von einer Datensammlungskoordinierungsfunktion (24), wobei die Anforderung ein Schema der Daten auf Basis der Metadateninstanz umfasst, die sich auf die zu speichernden Daten bezieht, und
Verarbeiten (S500) der Anforderung, wobei das Verarbeiten Folgendes beinhaltet
Bestimmen (S510) eines für die Anforderungen geeigneten Datenspeichers (50),
Erstellen (S520) eines Schemas zum Zugreifen auf die Daten, und
Senden (S530) einer Anzeige des bestimmten Datenspeichers (50) und des Schemas zum Zugreifen auf den Datenspeicher (50) an die Datensammlungskoordinierungsfunktion (24).

11. Vorrichtung zur Verwendung durch ein Kommunikationsnetzwerkelement oder eine Kommunikationsnetzwerkfunktion, das bzw. die dazu ausgelegt ist, als eine Repositorium (22) in einem Kommunikationsnetzwerk zu fungieren, wobei die Vorrichtung Folgendes umfasst
mindestens eine Verarbeitungsschaltung (221), und
mindestens einen Speicher (224) zum Speichern von Anweisungen, die von der Verarbeitungsschaltung (221) auszuführen sind,
wobei der mindestens eine Speicher (224) und die Anweisungen dazu ausgelegt sind, die Vorrichtung mit der mindestens einen Verarbeitungsschaltung (221) zu Folgendem zu veranlassen:
Empfangen einer Anforderung zum Auflösen einer Metadateninstanz, die auf Basis einer Anforderung zum Bereitstellen von Daten für eine Anzeige von Datenressourcen für die Daten, die den angeforderten Daten entsprechen, erzeugt wird, von einer Datensammlungskoordinierungsfunktion (24), und
Verarbeiten der Anforderung zum Auflösen, wobei das Verarbeiten Folgendes umfasst
Bereitstellen der Anzeige der Datenressourcen für die Daten für die Datensammlungskoordinierungsfunktion (24),
Empfangen einer Anforderung zum Registrieren einer Metadateninstanz und eines Schemas zum Zugreifen auf Daten, die von einer Datenquelle (30) bereitgestellt werden, um die Daten als Verlaufsdaten wiederverwendbar zu machen, von der Datensammlungskoordinierungsfunktion (24),
und Verarbeiten der Anforderung zum Registrieren, wobei die Anforderung zum Auflösen der Metadateninstanz auf Basis der beim Registrieren erhaltenen Informationen verarbeitet wird.

12. Vorrichtung nach Anspruch 11, wobei der mindestens eine Speicher (224) und die Anweisungen ferner dazu ausgelegt sind, die Vorrichtung mit der mindestens einen Verarbeitungsschaltung (221) mindestens zu Folgendem zu veranlassen:
Bestimmen von einem eines Datenproduzenten (30), der in der Lage ist, die Daten zu produzieren, und einem Datenspeicher (50), in dem Verlaufsdaten gespeichert sind, die den angeforderten Daten entsprechen, als die Datenressourcen für die Daten, die den angeforderten Daten entsprechen.

13. Verfahren zur Verwendung in einem Kommunikationsnetzwerkelement oder einer Kommunikationsnetzwerkfunktion, das bzw. die dazu ausgelegt ist, als eine Repositorium (22) in einem Kommunikationsnetzwerk zu fungieren, wobei das Verfahren Folgendes umfasst
Empfangen (S600) einer Anforderung zum Auflösen einer Metadateninstanz, die auf Basis einer Anforderung zum Bereitstellen von Daten für eine Anzeige von Datenressourcen für die Daten, die den angeforderten Daten entsprechen, erzeugt wird, von einer Datensammlungskoordinierungsfunktion (24), und
Verarbeiten (S600) der Anforderung zum Auflösen, wobei das Verarbeiten das Bereitstellen (S610) der Anzeige der Datenressourcen für die Daten für die Datensammlungskoordinierungsfunktion (24) umfasst,
Empfangen einer Anforderung zum Registrieren einer Metadateninstanz und eines Schemas zum Zugreifen auf Daten, die von einer Datenquelle (30) bereitgestellt werden, um die Daten als Verlaufsdaten wiederverwendbar zu machen, von der Datensammlungskoordinierungsfunktion (24), und
Verarbeiten der Anforderung zum Registrieren, wobei die Anforderung zum Auflösen der Metadateninstanz auf Basis der beim Registrieren erhaltenen Informationen verarbeitet wird.

14. Computerprogrammprodukt für einen Computer, das Softwarecodeabschnitte zum Durchführen der Schritte nach einem der Ansprüche 6, 10 oder 13, wenn das Produkt auf dem Computer läuft, beinhaltet.

15. Computerprogrammprodukt nach Anspruch 14, wobei
das Computerprogrammprodukt ein computerlesbares Medium beinhaltet, auf dem die Softwarecodeabschnitte gespeichert sind, und/oder
das Computerprogrammprodukt direkt in den internen Speicher des Computers ladbar und/oder via ein Netzwerk mittels mindestens einer von einer Hochlade-, Herunterlade- und Pushprozedur übertragbar ist.

## Revendications

1. Appareil destiné à être utilisé par un élément ou une fonction de réseau de communication configuré pour agir en tant que fonction de coordination de collecte de données (24) dans un réseau de communication, l'appareil comprenant
au moins une circuiterie de traitement (241), et
au moins une mémoire (244) pour stocker des instructions à exécuter par la circuiterie de traitement (241),
dans lequel l'au moins une mémoire et les instructions sont configurées pour, avec l'au moins une circuiterie de traitement, amener l'appareil au moins :
à recevoir, d'un consommateur de données (10), une demande de fourniture de données en vue de leur traitement par le consommateur de données (10), et
à traiter la demande, le traitement comportant
la détermination précisant si les données demandées sont disponibles sous forme de données d'historique,
en cas de détermination négative,
l'obtention, à partir d'une fonction de gestion de configuration (26), d'une instance de métadonnées relative aux données demandées,
la création d'un schéma des données demandées sur la base de l'instance de métadonnées,
l'obtention d'un schéma d'accès aux données qui sont fournies par une source de données (30) pour rendre les données réutilisables sous forme de données d'historique, et
l'enregistrement de l'instance de métadonnées obtenue et du schéma d'accès aux données dans un référentiel (22),
dans lequel
dans le cas où la détermination précisant si les données demandées sont disponibles sous forme de données d'historique est positive, le traitement comporte en outre
la demande au référentiel (22) de résoudre l'instance de métadonnées générée sur la base de la demande,
l'obtention d'une indication des ressources de données pour les données d'historique correspondant aux données demandées,
la demande d'une tâche d'exploration de données pour les données d'historique dans une fonction de gestion de contrôle de magasin de données (40),
la réception des données d'historique d'un stockage de données (50), et
le transfert des données d'historique au consommateur de données (10).

2. Appareil selon la revendication 1, dans lequel l'au moins une mémoire (244) et les instructions sont en outre configurées pour, avec l'au moins une circuiterie de traitement (241), amener l'appareil au moins :
à obtenir, avec l'instance de métadonnées relative aux données demandées, à partir de la fonction de gestion de configuration (26), une identification d'au moins une source de données (30) en mesure de produire les données demandées,
à envoyer une indication de création d'une instance d'objet géré à la fonction de gestion de configuration (26) du réseau de communication sur la base de l'identification reçue de la source de données (30) en mesure de produire les données demandées,
à recevoir les données demandées qui sont produites par la source de données (30), et
à transférer les données reçues au consommateur de données (10).

3. Appareil selon la revendication 2, dans lequel l'au moins une mémoire (244) et les instructions sont en outre configurées pour, avec l'au moins une circuiterie de traitement (241), amener l'appareil au moins :
lorsque les données demandées qui sont produites par la source de données (30) sont reçues, à stocker les données dans un stockage de données (50) conformément au schéma d'accès aux données.

4. Appareil selon l'une des revendications 1 à 3, dans lequel la demande comporte au moins l'une parmi une localisation géographique ou une indication d'une partie de réseau à laquelle les données demandées doivent être liées, au moins l'une parmi une indication temporelle ou une période de temps à laquelle les données demandées doivent être liées, et une finalité des données.

5. Appareil selon l'une des revendications 1 à 4, dans lequel le réseau de communication est basé sur une norme 3GPP et les données qui sont demandées sont liées au diagnostic et au dépannage en tant que traitement par le consommateur de données (10).

6. Procédé destiné à être utilisé dans un élément ou une fonction de réseau de communication configuré pour agir en tant que fonction de coordination de collecte de données (24) dans un réseau de communication, le procédé comprenant
la réception (S400), d'un consommateur de données (10), d'une demande de fourniture de données en vue de leur traitement par le consommateur de données (10), et
le traitement (S400) de la demande, le traitement comportant
la détermination précisant si les données demandées sont disponibles sous forme de données d'historique,
en cas de détermination négative,
l'obtention (S410), à partir d'une fonction de gestion de configuration (26), d'une instance de métadonnées relative aux données demandées,
la création (S420) d'un schéma des données demandées sur la base de l'instance de métadonnées,
l'obtention (S430) d'un schéma d'accès aux données qui sont fournies par une source de données (30) pour rendre les données réutilisables sous forme de données d'historique, et
l'enregistrement (S440) de l'instance de métadonnées obtenue et le schéma d'accès aux données dans un référentiel (22),
dans lequel
dans le cas où la détermination précisant si les données demandées sont disponibles sous forme de données d'historique est positive, le traitement (S400) comporte en outre
la demande (S310) au référentiel (22) de résoudre l'instance de métadonnées générée sur la base de la demande.
l'obtention (S315) d'une indication des ressources de données pour les données d'historique correspondant aux données demandées.
la demande (S320) d'une tâche d'exploration de données pour les données d'historique dans une fonction de gestion de contrôle de magasin de données (40),
la réception (S345) des données d'historique d'un stockage de données (50), et
le transfert (S355) des données d'historique au consommateur de données (10).

7. Appareil destiné à être utilisé par un élément ou une fonction de réseau de communication configuré pour agir en tant que fonction de contrôle de magasin de données (40) dans un réseau de communication, l'appareil comprenant
au moins une circuiterie de traitement (401), et
au moins une mémoire (404) pour stocker des instructions à exécuter par la circuiterie de traitement (401),
dans lequel l'au moins une mémoire (404) et les instructions sont configurées pour, avec l'au moins une circuiterie de traitement (401), amener l'appareil au moins :
à recevoir, d'une fonction de coordination de collecte de données (24), une demande de fourniture d'informations concernant un stockage de données dans lequel peuvent être stockées des données fournies par une source de données (30) pour rendre les données réutilisables sous forme de données d'historique, dans lequel la demande comprend un schéma des données basé sur une instance de métadonnées liée aux données à stocker, et
à traiter la demande, le traitement comportant
la détermination d'un stockage de données (50) qui convient à la demande,
la création d'un schéma d'accès aux données, et
l'envoi d'une indication du stockage de données (50) déterminé et du schéma d'accès aux données à la fonction de coordination de collecte de données (24).

8. Appareil selon la revendication 7, dans lequel
le schéma d'accès aux données comprend un identifiant de ressource, une instance de requête de lecture et une instance de requête d'écriture, et
le schéma d'accès aux données comporte l'un parmi un schéma XML, un schéma JSON et un schéma YANG.

9. Appareil selon la revendication 7, dans lequel l'au moins une mémoire (404) et les instructions sont en outre configurées pour, avec l'au moins une circuiterie de traitement (401), amener l'appareil au moins :
pour déterminer le stockage de données (50), à sélectionner un stockage de données existant qui convient pour stocker les données, ou à créer un nouveau stockage de données qui convient pour stocker les données.

10. Procédé destiné à être utilisé dans un élément ou une fonction de réseau de communication configuré pour agir en tant que fonction de contrôle de magasin de données (40) dans un réseau de communication, le procédé comprenant
la réception (S500), d'une fonction de coordination de collecte de données (24), d'une demande de fourniture d'informations concernant un stockage de données dans lequel peuvent être stockées des données fournies par une source de données (30) pour rendre les données réutilisables sous forme de données d'historique, dans lequel la demande comprend un schéma des données basé sur une instance de métadonnées liée aux données à stocker, et
le traitement (S500) de la demande, le traitement comportant
la détermination (S510) d'un stockage de données (50) qui convient à la demande,
la création (S520) d'un schéma d'accès aux données, et
l'envoi (S530) d'une indication du stockage de données (50) déterminé et du schéma d'accès au stockage de données (50) à la fonction de coordination de collecte de données (24).

11. Appareil destiné à être utilisé par un élément ou une fonction de réseau de communication configuré pour agir en tant que référentiel (22) dans un réseau de communication, l'appareil comprenant
au moins une circuiterie de traitement (221), et
au moins une mémoire (224) pour stocker des instructions à exécuter par la circuiterie de traitement (221),
dans lequel l'au moins une mémoire (224) et les instructions sont configurées pour, avec l'au moins une circuiterie de traitement (221), amener l'appareil au moins :
à recevoir, d'une fonction de coordination de collecte de données (24), une demande de résoudre une instance de métadonnées générée sur la base d'une demande de fourniture de données, à une indication de ressources de données pour les données correspondant aux données demandées, et
à traiter la demande de résolution, le traitement comprenant,
la fourniture, à la fonction de coordination de collecte de données (24), de l'indication des ressources de données pour les données,
la réception, de la fonction de coordination de collecte de données (24), d'une demande d'enregistrement d'une instance de métadonnées et d'un schéma d'accès aux données qui sont fournies par une source de données (30) pour rendre les données réutilisables sous forme de données d'historique, et
le traitement de la demande d'enregistrement, dans lequel la demande de résolution de l'instance de métadonnées est traitée sur la base des informations obtenues lors de l'enregistrement.

12. Appareil selon la revendication 11, dans lequel l'au moins une mémoire (224) et les instructions sont en outre configurées pour, avec l'au moins une circuiterie de traitement (221), amener l'appareil au moins :
à déterminer, en tant que ressources de données pour les données correspondant aux données demandées, l'un parmi un producteur de données (30) en mesure de produire les données, et un stockage de données (50) stockant les données d'historique correspondant aux données demandées.

13. Procédé destiné à être utilisé dans un élément ou une fonction de réseau de communication configuré pour agir en tant que référentiel (22) dans un réseau de communication, le procédé comprenant
la réception (S600), d'une fonction de coordination de collecte de données (24), d'une demande de résolution d'une instance de métadonnées générée sur la base d'une demande de fourniture de données, à une indication de ressources de données pour les données correspondant aux données demandées, et
le traitement (S600) la demande de résolution, le traitement comportant
la fourniture (S610), à la fonction de coordination de collecte de données (24), de l'indication des ressources de données pour les données,
la réception, de la fonction de coordination de collecte de données (24), d'une demande d'enregistrement d'une instance de métadonnées et d'un schéma d'accès aux données qui sont fournies par une source de données (30) pour rendre les données réutilisables sous forme de données d'historique, et
le traitement de la demande d'enregistrement, dans lequel la demande de résolution de l'instance de métadonnées est traitée sur la base des informations obtenues lors de l'enregistrement.

14. Produit de programme informatique pour un ordinateur, comportant des portions de code logiciel pour effectuer les étapes de l'une des revendications 6, 10 ou 13, lorsque ledit produit est exécuté sur l'ordinateur.

15. Produit de programme informatique selon la revendication 14, dans lequel
le produit de programme informatique comporte un support lisible par ordinateur sur lequel lesdites portions de code logiciel sont stockées, et/ou
le produit de programme informatique est directement chargeable dans la mémoire interne de l'ordinateur et/ou transmissible via un réseau au moyen d'au moins l'une des procédures de téléchargement vers l'amont, de téléchargement vers l'aval et de poussée.
